Europäisches Patentamt

European Patent Office

Office européen des brevets

(11) Publication number : **0 473 558 A1**

# (12) EUROPEAN PATENT APPLICATION

(21) Application number : **91830348.8**

(22) Date of filing : **13.08.91**

(51) Int. Cl.⁵ : **A47L 15/42, F16L 55/24, B01D 35/02**

(30) Priority : **28.08.90 IT 2166490 U**

(43) Date of publication of application :
**04.03.92 Bulletin 92/10**

(84) Designated Contracting States :
**BE CH DE DK FR GB LI NL SE**

(71) Applicant : **Parigi, Cesare**
**Via Velleia, 19**
**I-20052 - Monza (Milano) (IT)**

(72) Inventor : **Parigi, Cesare**
**Via Velleia, 19**
**I-20052 - Monza (Milano) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) **Fitting pipe for water supplying washing machines, in particular dish washing machines.**

(57)   A fitting pipe for water supplying washing machines, in particular dish washing machines, comprises an inlet fitting assembly including a filtering element (5), which comprises a screen (11) having a very dense mesh arrangement, which screen is made rigid with a gasket 11', the filtering element having a frustum of cone shape.

EP 0 473 558 A1

FIG.1

BACKGROUND OF THE INVENTION

The present invention related to a fitting pipe for water supplying washing machines, in particular dish washing machines.

As is known, water for supplying a washing machine is usually derived from a hydraulic system tap,through a suitable fitting pipe, including, at the end portions thereof, suitable coupling and clamping nut elements.

Also known is the fact that tire water supplied by a conventional water system, in addition to holding a very high amount of calcium carbonate, also includes a great number of sand particles.

These sand particles, because of the motion of water through the washing basin, are susceptible is undesirably damage the articles subjected to the washing operation.

A simple provision of a filtering disc element between the water supply tap and the inlet of the fitting pipe, howewer, does not allow an user to easily monitor the condition of the filtering assembly, and, because of this reason, the fitting pipe must be frequently removed for inspection, which is a very tedious operation for the user.

SUMMARY OF THE INVENTION

Accordingly, the aim of the present invention is to overcome the above mentioned drawbacks, by providing a fitting pipe for water supplying washing machines, in particular dish washing machines, which directly includes a filtering element adapted to filter out possible particles suspended in the water being supplied to the washing machine.

Within the scope of the above mentioned aim, a main object of the present invention is to provide such a fitting pipe which allows an user to promptly monitor a possible clogging condition of the filtering assembly.

Another object of the present invention is to provide such a fitting pipe for water supplying washing machines, in particular dish washing machines, which is very reliable in operation and can be easily and quickly installed and removed.

According to one aspect of the present invention, the above mentioned aim and objects, as well as yet other objects, which will become more apparent thereinafter, are achieved by a fitting pipe for water supplying washing machines, in particular dish washing machines, said fitting pipe including an inlet fitting assembly, characterized in that said inlet fitting assembly includes a built-in filtering element which can be seen by transparency, in order to allow an user to monitor either a not clogged or a clogged condition of said pipe, said filtering element being associated with said fitting pipe in an easily removable manner.

BRIEF DESCRIPTION OF THE DRAWINGS

Further characteristics and advantages of the fitting pipe for water supplying washing machines, in particular dish washing machines according to the present invention, will become more apparent from the following detailed disclosure of a preferred, though not exclusive, embodiment of the invention, which is illustrated, by way of as indicative but not limitative example, in the figures of the accompanying drawings, where:

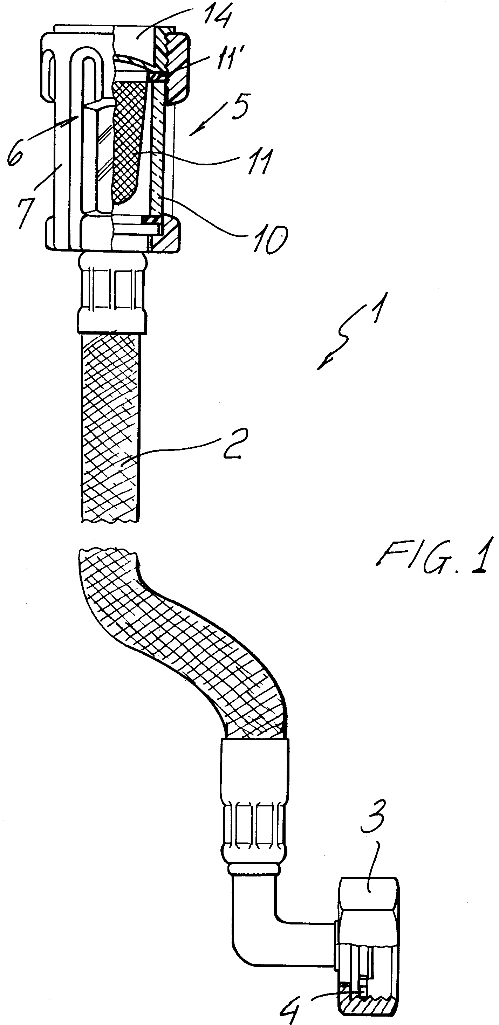

Figure 1 is a schematic view illustrating the fitting pipe according to the present invention, the inlet and outlet fitting members of the pipe being shown partially cross-sectioned;

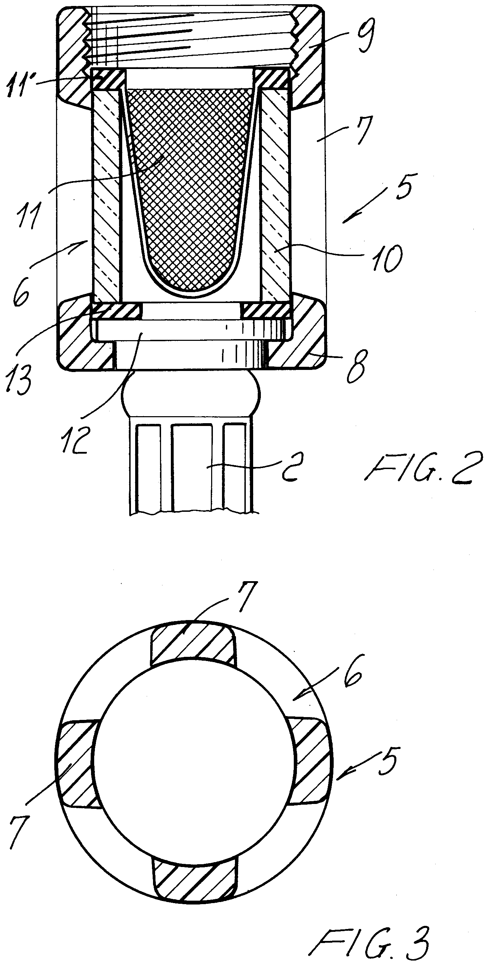

Figure 2 is a longitudinal cross-sectional view of the inlet fitting element of the pipe according to the present invention; and

Figure 3 is a cross-sectional view of a frame bearing the filtering element included in the fitting pipe according to the present invention.

DESCRIPTION OF THE PREFERRED EMBODIMENT

With reference to the figures of the accompanying drawings, the fitting pipe for water supplying washing machines, in particular dish washing machines, according to the present invention, and generally indicated at the reference number 1, comprises a pipe element 2, either of a rigid or flexible type, at one end portion of which (that is the portion provided for coupling to the washing machine) there is assembled a fitting or coupling nut element 3, of a conventional type, which includes a tightness gasket 4.

At the other end portion of said pipe, provided for coupling to the water supply tap, there is rotatably assembled, according to the invention, a filtering assembly 5.

More specifically, this filtering assembly 5 comprises a bearing frame 6, including a plurality of rod elements 7 which are coupled, at the ends thereof communicating with the pipe, by a ring-like element 8 and, at the opposite end portions thereof, by a small length tubular element 9, having an inner threaded surface, for coupling to the water supply tap outlet.

Inside the mentioned frame, there is arranged a transparent or clear material small tube 11, in which there is restrained a filtering element 11, including a screen having a very dense mesh arrangement, said screen being rigid with a seal or gasket 11'.

The mentioned filtering element 11, as is shown, has a substantially frustum of cone shaped configuration.

Between the bottom or base of said clear small tube and the flanged end portion 12 of the fitting pipe 2, there is moreover provided a further sealing gasket 13.

A restraining plug element 14 is moreover provided which, as pressure fitted to the top threaded portion of said filtering assembly, will restrain the component elements of the latter within the mentioned frame, as the pipe according to the present invention is stored or transported.

Thus, owing to the disclosed arrangement of the subject filtering assembly, an user can easily and continuously monitor a possible clogging condition of the filtering element 11.

If the filtering element would be clogged, then the user can easily remove said filtering assembly 5 to properly clean it to recovery its filtering properties.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A fitting pipe for water supplying washing machines, in particular dish washing machines, said fitting pipe including an inlet fitting assembly, characterized in that said inlet fitting assembly includes a built-in filtering element which can be seen by transparency, in order to allow an user to monitor either a not clogged or a clogged condition of said pipe, said filtering element being associated with said fitting pipe in an easily removable manner.

2. A fitting pipe, according to Claim 1, characterized in that said fitting pipe comprises a rigid or flexible pipe element at one end of which there is assembled a coupling nut element including a tightness gasket, at the other end of said pipe, provided for coupling with a water supplying tap, there being rotatably mounted said filtering assembly.

3. A pipe according to Claims 1 and 2, characterized in that said filtering assembly comprises a bearing frame including a plurality of rod elements coupled, at an end portion thereof communicating with said pipe, by a ring like element and, at the opposite end portion thereof, by a small length tubular element which has an inner threaded surface for coupling with said water supplying tap.

4. A pipe according to one or more of the preceding claims, characterized in that inside said rod frame there is arranged a clear material small tube in which there is housed said filtering element including a screen having a very dense mesh arrangement.

5. A pipe, according to one or more of the preceding claims, characterized in that said filtering element comprises a substantially frustum of cone shaped screen which is made rigid with a gasket.

6. A pipe, according to one or more of the preceding claims, characterized in that between the bottom portion of said clear tube and a flanged end portion of said fitting pipe there is arranged a further sealing gasket.

7. A pipe, according to one or more of the preceding claims, characterized in that said pipe further comprises a restraining plug element adapted to be pressure engaged in the threaded top portion of said filtering assembly for restraining therein the component elements of said filtering assembly, in said rod frame, as the pipe is stored and transported.

FIG. 1

FIG. 2

FIG. 3

European Patent Office

**EUROPEAN SEARCH REPORT**

Application Number

| | DOCUMENTS CONSIDERED TO BE RELEVANT | | EP 91830348.8 |
|---|---|---|---|
| Category | Citation of document with indication, where appropriate, of relevant passages | Relevant to claim | CLASSIFICATION OF THE APPLICATION (Int. Cl.5) |
| Y | <u>US - RE - 22 936</u> (WILSON) * Column 6, lines 49-52; fig. 2,5,6 * -- | 1 | A 47 L 15/42 F 16 L 55/24 B 01 D 35/02 |
| Y | <u>DE - A - 3 248 720</u> (RICHTER CHEMIE TECHNIK) * Claim 7; page 5, penultimate paragraph; fig. 1,2,3 * -- | 1 | |
| A | <u>EP - A - 0 079 841</u> (ZENITH AVIATION) * Page 3, last paragraph; fig. 1-3 * -- | 2,5 | |
| A | <u>DE - C - 2 754 594</u> (SCHULTZ) * Column 4, lines 66-68; column 5, lines 1-6; fig. 1 * -- | 3,4 | |
| A | <u>DE - B - 2 642 641</u> (PONT-A-MOUSSON S.A.) * Page 4, lines 19-31; fig 12 * ---- | 7 | TECHNICAL FIELDS SEARCHED (Int. Cl.5) A 47 L 15/00 B 01 D 35/00 F 16 L 55/00 B 67 D 5/00 |

The present search report has been drawn up for all claims

| Place of search | Date of completion of the search | Examiner |
|---|---|---|
| VIENNA | 03-12-1991 | BISTRICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)